**Europäisches Patentamt**

**European Patent Office**

**Office européen des brevets**

(11) Veröffentlichungsnummer: **0 074 127**
**A1**

(12) # EUROPÄISCHE PATENTANMELDUNG

(21) Anmeldenummer: 82200878.5

(22) Anmeldetag: 12.07.82

(51) Int. Cl.³: **F 16 C 32/06**

(30) Priorität: 28.08.81 FR 8116454

(43) Veröffentlichungstag der Anmeldung:
16.03.83 Patentblatt 83/11

(84) Benannte Vertragsstaaten:
CH DE GB LI

(71) Anmelder: CEM COMPAGNIE ELECTRO-MECANIQUE
12, rue Portalis
F-75383 Paris Cédex 08(FR)

(72) Erfinder: Chaboseau, Jean
30, rue Louise Chenu
F-94470 Boissy-Saint-Leger(FR)

(74) Vertreter: Klein, Ernest
BBC Aktiengesellschaft Brown, Boveri & Cie. Abteilung
Patente
CH-5401 Baden(CH)

(54) Flüssigkeitsgeschmiertes Lager.

(57) Flüssigkeitsgeschmiertes Lager mit einem äusseren Element (2), welches mit geringem Spiel (3) ein zylindrisches inneres Element (1, 4) umgibt und mehrere Kammern ($CH_1$ bis $CH_8$) mit Einspritzöffnungen ($0_1$ bis $0_8$) für eine Tragflüssigkeit aufweist, sowie einem Gehäuse (8) mit Sammelkammern (18, 19, 20) für die aus dem Spiel (3) austretende Tragflüssigkeit und einem hydraulischen Kreislauf (25), um die Tragflüssigkeit aus dem genannten Sammelkammern (18, 19, 20) zur Mehrzahl der Kammern ($CH_1$ bis $CH_8$) zurückzubefördern.

Um eine Verdampfung der Flüssigkeit innerhalb des Spiels (3) zu vermeiden, ist zwischen mindestens einem Ende des Spiels (3) und der benachbarten Sammelkammer (19) eine Entspannungskammer (35) vorgesehen, welche mit der Kammer (19) über einen schmalen Raum (37) kommuniziert, dessen Durchströmquerschnitt grösser bemessen ist als jener des Spiels (3) und der derart berechnet ist, dass der Flüssigkeitsdruck in der Kammer (35) grösser ist als jener in der Kammer (19).

Fig.5

483/81
Ke/eh

- 1 -

## Flüssigkeitsgeschmiertes Lager

Die vorliegende Erfindung betrifft ein flüssigkeitsgeschmiertes Lager

- mit einem inneren zylindrischen Element und einem äusseren hülsenförmigen Element, welches das innere zylindrische Element mit geringem Spiel umhüllt, wobei das eine der beiden Elemente (im allgemeinen das äussere, hülsenförmige Element) zwischen seinen Enden mehrere Kammern aufweist, die an der dem andern Element zugekehrten Umfangsfläche regelmässig über dem Kreisumfang verteilt sind und mit Einspritzöffnungen für eine Tragflüssigkeit versehen sind,
- mit einem Lagergehäuse, dessen Dichtungen zusammen mit dem äusseren und dem inneren Element Sammelkammern bilden für die aus dem genannten Spiel resp. an den Lagerenden austretende Tragflüssigkeit,
- und mit einem hydraulischen Kreislauf, um die Tragflüssigkeit aus den Sammelkammern zu der Mehrzahl von Kammern umzuwälzen.

Flüssigkeitsgeschmierte Lager sind in der Technik der Schwenkteile / Drehteile gut bekannt. In diesen Lagern sind das feststehende und das drehende Element - im allgemeinen das äussere und das innere Element - durch einen zusammenhängenden Flüssigkeitsfilm voneinander getrennt, wobei im Flüssigkeitsfilm genügend hohe Drücke herrschen, um eine gegenseitige Berührung der Elemente zu verhindern. Gemäss ihrer Funktionsweise gibt es zwei Lagertypen: hydrodynamische und hydrostatische Lager.

Die hydrodynamischen Lager sind derart konzipiert und ausgeführt, dass die Drücke, welches das feststehende Element (Hülse, Büchse) vom drehenden Element (Achse, Welle) fernhalten, im Arbeitsmittel erzeugt werden durch Scherwirkung eines keilförmigen Arbeitsmittelfilms. Die Flüssigkeit, in der Regel Oel, wird in den Spalt zwischen Welle und Büchse unter einem Druck eingeführt, der geradeaus reicht, um den notwendigen Durchfluss zu gewährleisten. Die Trennkräfte sind abhängig von der Viskosität der Flüssigkeit, von Grösse und Verteilung des Spiels zwischen Welle und Büchse, von der relativen Geschwindigkeit zwischen Welle und Büchse, wobei alle diese Parameter gleichzeitig eine wesentliche Rolle in der Funktionsweise spielen.

Hingegen wird bei hydrostatischen Lagern die Flüssigkeit mit relativ hohem Druck in den Spalt zwischen Welle und Büchse mittels einer Pumpe gefördert; der Druck ist hier genügend hoch, um Welle und Büchse auf Abstand zu halten. Die Tragfähigkeit des Lagers resultiert aus den unterschiedlichen Drücken an den "belasteten" und den "entlasteten" Mantellinien des Lagers, wobei die Druckdifferenz selbst aus den unterschiedlichen Radialspielen im Lagerinnern resultiert. Die unterschiedlichen Radialspiele stehen in Beziehung zur Mittenverlagerung von Welle und Lager, welche ihrerseits bedingt ist durch die auf die Welle wirkende Belastung.

Damit ein flüssigkeitsgeschmiertes Lager, unabhängig von seinem Typ, richtig arbeitet, müssen die Eigenschaften der
Tragflüssigkeit den Erwartungen entsprechen, insbesonder
müssen sie über einem grösstmöglichen Betriebsbereich beständig sein. Daraus folgt, dass in der Regel Oel als Tragflüssigkeit verwendet wird. Gleichwohl ist es auch bekannt,
andere Flüssigkeiten als Tragflüssigkeiten zu benützen,
beispielsweise die von der - das Lager aufweisenden - Maschine geförderte oder behandelte Flüssigkeit; dadurch müssen
keine aufwendigen Dichtvorrichtungen vorgesehen werden.
Allerdings muss in diesem letzten Fall darauf geachtet werden,
dass während des Betriebes eventuelle Variationen der physikalischen oder chemischen Eigenschaften der verwendeten
Tragflüssigkeit die Funktionsweise des Lagers nicht merklich beeinträchtigen. Insbesondere gilt es zu vermeiden,
dass die Tragflüssigkeit im Lagerinneren verdampft.

Die vorliegende Erfindung hat die Lösung dieses Problems
zur Aufgabe, wobei das Verdampfungsrisiko der Tragflüssigkeit in einem flüssigkeitsgeschmierten Lager herabzumindern
ist.

Zu diesem Zweck ist das flüssigkeitsgeschmierte Lager dadurch
gekennzeichnet, dass es zwischen mindestens einem axialen
Ende des Spieles und der daran angrenzenden Sammelkammer
mit einer zusätzlichen Entspannungskammer versehen ist,
die mit der Sammelkammer über einen kleinen Ringraum verbunden ist, wobei der Ringraum gegenüber dem Spiel derart
berechnet ist, dass der Flüssigkeitsdruck in der Entspannungskammer höher ist als jener in der angrenzenden Sammelkammer.

Die Erfindung wird besser verständlich beim Durchlesen der
nachfolgenden Beschreibung, welche ein hydrostatisches Lager
zum Gegenstand hat und sich auf die beiliegenden Zeichnungen
bezieht:

Darin zeigt:

Fig. 1 und 2     einen Axialschnitt resp. Querschnitt eines herkömmlichen hydrostatischen Lagers;

Fig. 3     ein Diagramm, in welchem im Innern des Lagers nach Fig. 1 und 2 die Veränderung des Druckes von der Mitte des Lagers zu einem seiner Enden hin dargestellt ist;

Fig. 4     ein Entropie-Diagramm T-S, in welchem die Entspannung der Tragflüssigkeit im Innern des Lagers nach Fig. 1 und 2 dargestellt ist;

Fig. 5     einen Axialschnitt eines erfindungsgemässen hydrostatischen Lagers mit einer ersten Ausführungsform der Entspannungskammer im oberen Teil der Figur und einer zweiten Ausführungsform der Entspannungskammer im unteren Teil der Figur;

Fig. 6     die Entspannungskammer gemäss dem unteren Teil von Fig. 5 in grösserem Massstab;

Fig. 7 und 8     ähnliche Ansichten wie in Fig. 6 von Ausfüh-rungsvarianten.

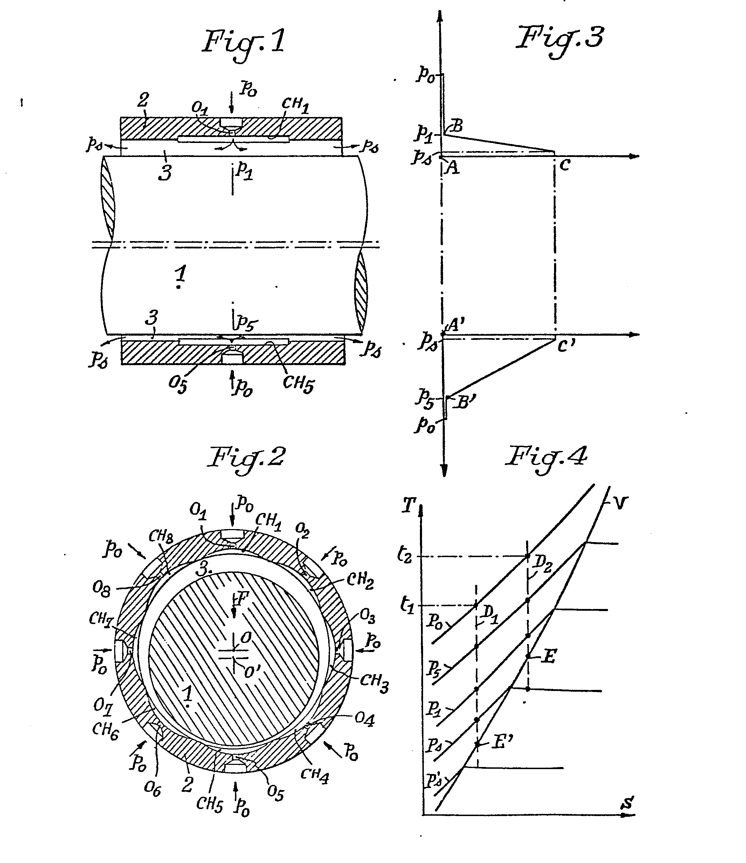

Bevor die eigentliche Erfindung beschrieben wird, wird kurz auf die Funktionsweise eines zum Stande der Technik gehörenden hydrostatischen Lagers gemäss Fig. 1 bis 4 eingegangen. Es wird Wasser als Tragflüssigkeit angenommen. In der Tat zeigt sich in verschiedenen Fällen die Anwendung von Wasser als Tragflüssigkeit als vorteilhaft, insbesondere bei Maschinen der Gattung "Dampfverdichter", da hier eine Integrierung der Lager in die Maschine ermöglicht und eine starke Vereinfachung der Dichtungen erzielt wird; vermieden werden relativ sperrige Dichtungen von schwieriger Herstellung und ungewisser Funktionsweise, insbesondere wenn das Maschinengehäuse unter Vakuum steht.

In den Fig. 1 und 2 ist mit 1 eine Welle mit oder ohne Laufbüchse bezeichnet und mit 2 eine Büchse, welche die Welle 1 mit geringem Spiel 3 umschliesst. In den Fig. 1 und 2 ist das Spiel 3 stark übertrieben dargestellt, denn in Wirklichkeit ist es sehr viel geringer (in der Grössenordnung von einigen zehntel oder hundertstel Millimetern). In Fig. 2 ist mit 0 der Mittelpunkt von Büchse 2 und unbelasteter Welle 1 bezeichnet und mit 0' der Mittelpunkt der unter der Last F stehenden Welle 1.

Zwischen ihren Enden ist die Büchse 2 mit einer gewissen Anzahl von Kammern versehen, beispielsweise acht Kammern $CH_1$ bis $CH_8$ gemäss Fig. 2. Die Tragflüssigkeit, beispielsweise Wasser, wird mittels einer Pumpe (nicht dargestellt in Fig. 1 und 2) unter Druck über kalibrierte Einspritzöffnungen $O_1$ bis $O_8$ in die Kammern $CH_1$ bis $CH_8$ eingeführt. Am Eintritt aller Oeffnungen $O_1$ bis $O_8$ weist der Druck $p_0$ den gleichen Wert auf: Es ist der Druckwert, der von der Speisepumpe geliefert wird. Des weiteren hat der Druck $p_s$ des Wassers, welches an einem oder anderen Ende der Büchse aus dem Spiel 3 entweicht, den gleichen Wert über dem ganzen Wellenumfang: Es ist der in den - üblicherweise an den beiden Lagerenden vorgesehenen - Sammelkammern (nicht dargestellt in Fig. 1 und 2) herrschende Druck. Es wird indessen angemerkt, dass der Wert des Druckes $p_s$ an den beiden Büchsenenden gleich oder unterschiedlich gross sein kann, je nachdem, ob die Umgebungsbedingungen an den beiden Lagerenden gleich oder verschieden sind. Hingegen hat der Druck $p_i$ am Austritt jeder der Oeffnungen $O_i$ (i = 1, 2, 3, ..., 8) nicht den gleichen Wert über dem Umfang der Welle 1. In der Tat hängt der Druck $p_i$ von der Grösse des Radialspiels 3 zwischen Welle 1 und Büchse 2 ab, welches seinerseits infolge der Aussermittigkeit über dem Umfang der Welle 1 variiert und welches hauptsächlich die Durchlässigkeit des Spaltes bedingt; jenes Spaltes, welcher zwischen der Region der Oeffnungen $O_1$ bis $O_8$ und dem einem oder anderen Ende der Büchse 2 vom Wasser durchströmt wird. Je kleiner der Wert des Radialspaltes 3 ist, desto grösser ist der Wert des Druckes $p_i$.

Fig. 3 zeigt die Druckverteilung des Wassers im Lagerinnern. Genauer gesagt zeigt das obere Diagrammteil in Fig. 3 die Druckverteilung entlang der oberen Mantellinie der Welle 1 von der Oeffnung $O_1$ bis zum rechten Ende der Büchse 2, während das untere Diagrammteil der Fig. 3 die Druckverteilung entlang der unteren Mantellinie der Welle 1 von der Oeffnung $O_5$ bis zum rechten Ende der Büchse 2 zeigt. Mit $p_1$ und $p_5$ sind die Wasserdrücke am Ausgang der Oeffnungen $O_1$ resp. $O_5$ bezeichnet. Es versteht sich, dass die Druckverteilung im linken Lagerteil gleichartig ist wie die in Fig. 3 dargestellte. Der Unterschied der Flächeninhalte der Dreiecke A, B, C und A', B', C' bedingt in erster Linie die Tragfähigkeit des Lagers, welche die Last F ausgleicht.

Fig. 4 ist ein Entropie S/Temperatur T-Diagramm, welches die Entspannung des Wassers im Lager gemäss Fig. 1 und 2 illustriert. Die Linie V stellt die Verdampfungsgrenze des Wassers dar. Die Linien $P_0$, $P_1$, $P_5$ und $P_s$ sind Isobaren, welche den bereits oben erwähnten Drücken $p_0$, $p_1$, $p_5$ und $p_s$ entsprechen.

Bei normalen Betriebsbedingungen, beispielsweise bei der Temperatur $t_1$, entspannt sich das Wasser gemäss der verti-kalen Linie $D_1$ von der Isobaren $P_0$ auf die Isobare $P_s$. Steigt die Wassertemperatur hingegen zufälligerweise von $t_1$ auf $t_2$, so wird von der vertikalen Entspannungslinie $D_1$ auf $D_2$ übergegangen und das Wasser kann nicht auf den Druck $p_s$ (Isobare $P_s$) entspannt werden, ohne in einem Punkt E die Verdampfungsgrenze V zu schneiden. Infolgedessen verdampft das Wasser durch "flashing" (Kavitation) im Spiel 3, bevor es das rechte Ende der Büchse 2 erreicht hat (und auch bevor es das linke Ende der Büchse 2 erreicht hat, wenn der Wert des Druckes $p_s$ an diesem linken Ende gleich gross ist wie der Druckwert am rechten Ende). Da der Wert des Druckes $p_1$ kleiner ist als jener des Druckes $p_5$, wird das Wasser im Spiel 3 zuerst entlang der oberen Mantellinie der Welle 1 verdampfen und der dadurch im Spalt zwischen Welle 1 und Büchse 2 gebildete Dampf-"Pfropfen" wird eine Steigerung des Druckwertes $p_1$ und damit eine Verringerung der Lagertragfähigkeit zur Folge haben. Hieraus wird entweder eine Berührung und Reibung zwischen Welle 1 und Büchse 2 im unteren Lagerteil resultieren oder eine Lagerinstabilität, die zum selben Resultat oder anderen Lagerbeschädigungen führen wird.

Wenn überdies der Druck $p_s$ an einem Büchsenende zufälligerweise auf einen Wert absinkt, der beispielsweise der Isobare $P_s$ gemäss Fig. 4 entspricht, so wird sich das Wasser beispielsweise entlang der vertikalen Linie $D_1$ entspannen und hierbei in einem Punkt E' die Verdampfungsgrenze V schneiden, bevor die Isobare $P'_s$ erreicht wird; dies hat die gleichen Konsequenzen zur Folge wie oben erwähnt.

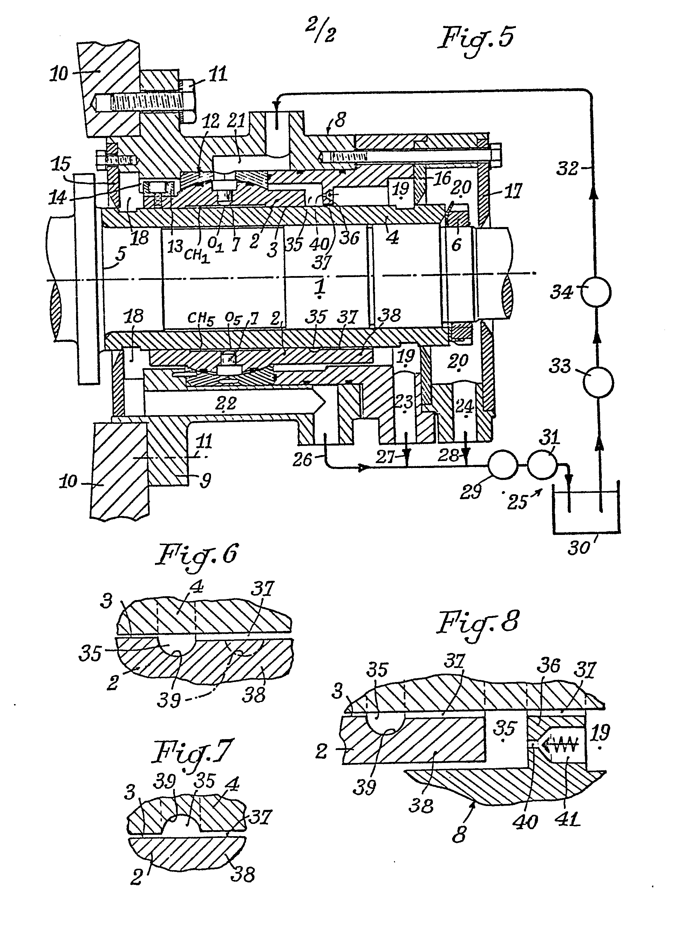

Derartige Vorfälle können aus praktisch jeder Abweichung der Entspannungslinie resultieren, welche durch eine Erhöhung der Wassertemperatur vor den Oeffnungen $O_1$ bis $O_8$ oder durch einen Druckabfall in den Sammelkammern an einem oder dem anderen Ende der Büchse 2 bedingt ist. Da der Druck an der oberen Mantellinie der Welle 1 niedriger ist, versteht es sich, dass dort eine grössere Anfälligkeit bei Betriebsstörungen vorherrscht; denn Druckabweichungen an den Büchsenenden wandern nur geringfügig entlang der unteren Mantellinie der Welle 1 und sind dort nur wenig folgenreich. Um die Risiken der Wasserverdampfung im Spiel 3 zwischen Welle 1 und Büchse 2 herabzumindern, ist das erfindungsgemässe Lager so konstruiert, dass im Spiel 3 jederzeit ein genügend grosser Druck aufrechterhalten bleibt, um das Wasser innerhalb des Lagers in seiner flüssigen Phase zu behalten. Unter Bezugnahme auf die Fig. 5 bis 8 wird nachstehend beschrieben, wie dieses Resultat erzielt werden kann.

In Fig. 5 sind ähnliche Elemente wie in Fig. 1 und 2 mit denselben Bezugszeichen versehen. Mit 4 ist eine Hülse bezeichnet, die auf der Welle 1 zwischen einem Bund 5 und einer Spannmutter 6 montiert ist. Mit 7 sind Einspritzdüsen bezeichnet, welche die kalibrierten Einspritzöffnungen $O_1$ bis $O_8$ festlegen. 8 ist ein Lagergehäuse, welches die Büchse 2 umhüllt und welches mit einem Ringflansch 9 versehen ist, über den das Lager mit dem Maschinengehäuse 10 mittels Schrauben 11 befestigt ist. Das Bezugszeichen 12 bezeichnet ein sphärisches Gelenk, über welches die Büchse 2 im Lagergehäuse 8 montiert ist. 13 ist ein Keil in einer am Lagergehäuse angeordneten Nut und verhindert ein Verdrehen der Büchse 2. Mit 15, 16 und 17 sind Dichtungen bezeichnet, welche am Gehäuse 8 befestigt sind und mit letzterem und der Hülse 4 Sammelkammern 18, 19 resp. 20 an den Lagerenden bilden. Die Oeffnungen der Einspritzdüsen 7 und die Sammelkammern 18, 19 und 20 stehen jeweils über Durchlässe 21, 22, 23 und 24 mit einem hydraulischen Kreislauf in Verbindung, der in einer Gesamtheit mit 25 bezeichnet ist; die Durchlässe 22, 23 und 24 sind im Gehäuse 8, der Durchlass 21 im Gehäuse 8 und im sphärischen Gelenk 21 gebildet. Wie in Fig. 5 gezeigt, kann der Kreislauf 25 Abführleitungen 26, 27 und 28 aufweisen, die jeweils die Durchlässe 22, 23 und 24 mit einer Rückförderpumpe 29 verbinden, welche ihrerseits das Wasser über eine Kühleinrichtung 31 in einen Vorratstank 30 drückt. Eine Speiseleitung 32 mit darin angeordneten Filter 33 und Speisepumpe 34 verbindet den Tank 30 mit dem Durchgang 21, welcher allen Einspritzdüsen 7 gemeinsam ist. Der hydraulische Kreislauf 25 kann überdies in bekannter Weise verschiedene andere Steuer- und Regeleinrichtungen, Mamometer, Druckspeicher usw. aufweisen. Alle bisher beschriebenen Lagerelemente sind wohlbekannt, weshalb sich eine ausführlichere Beschreibung erübrigt.

Gemäss vorliegender Erfindung wird nun an mindestens einem Ende der Büchse 2 eine Entspannungskammer 35 vorgesehen, um die Risiken einer Wasserverdampfung im Lagerinnern auf ein Minimum zu reduzieren. Zwei Ausführungsmöglichkeiten der Kammer 35 sind einerseits im oberen Teil, andererseits im unteren Teil der Fig. 5 gezeigt, wobei es sich versteht, dass in beiden Fällen die Entspannungskammer 35 sich umfangsmässig vorzugsweise über 360$^o$ erstreckt.

Wie im oberen Teil der Fig. 5 gezeigt, wird die Kammer 35 durch eine Wand 36 gebildet, welche in axialem Abstand zum Ende der Büchse 2 situiert ist und welche sich vom Gehäuse 8 aus bis auf einen kleinen Abstand zur Hülse 4 hin erstreckt und hierbei einen Ringspalt 37 von schwacher radialer Grösse ausspart.

Wie im unteren Teil der Fig. 5 gezeigt, weist die Hülse 2 eine axiale Verlängerung 38 auf, welche die Hülse 4 mit schwachem Radialspiel 37 umgibt; die Entspannungskammer 35 wird durch eine Ringnut 39 gebildet, welche in der inneren Umfangsfläche der Verlängerung 38 angebracht ist (siehe auch Fig. 6). Als Variante hierzu könnte die Nut 39 ebenfalls gemäss Fig. 7 in der Hülse 4 angebracht sein oder in der Welle 1, wenn diese eine Hülse aufweist.

In allen Fällen ist der Durchströmquerschnitt des Ringraums 37 zwischen Hülse 4 und Wand 36 oder Verlängerung 38 grösser als jener des Spiels 3 zwischen Hülse 4 und Büchse 2, um zu vermeiden, dass die Wand 36 oder die Verlängerung 38 als Lager arbeitet. Dieser Durchströmquerschnitt ist derart berechnet, dass der Wasserdruck in der Entspannungskammer 35 grösser ist als in der benachbarten Sammelkammer 19.

Bei Funktionsweise unter Normalbedingungen ist der Differenzdruck zwischen der Entspannungskammer 35 und der benachbarten Sammelkammer 19 gering. Wenn hingegen beim Auftreten von anormalen Betriebsbedingungen (beispielsweise ein Druckabfall in der Sammelkammer 19 kombiniert oder nicht mit einer Wassererwärmung usw.) die befürchtete Wasserverdampfung auftritt, so findet diese im Ringraum 37 statt und führt zu keinerlei Unregelmässigkeit im Lagerinnern, d.h. im Spiel 3 zwischen Hülse 4 und Büchse 2, da die wechselseitige Drucksteigerung im Innern der Kammer 35 homogen verlaufen wird. Die Kammer 35 benimmt sich so zu sagen als Druckspeicher und wirkt als Puffer zwischen der Sammelkammer 19 und dem Spiel 3 des Lagers.

Von Interesse kann die im unteren Teil in Fig. 5 sowie die in Fig. 6 und 7 gezeigte Anordnung einerseits sein, um mit grösserer Genauigkeit den relativen Ueberdruck zwischen Entspannungskammer 35 und Sammelkammer 19 zu steuern, und andererseits, um die Temperaturen Welle-Hülse und Wasser-Hülse zu homogenisieren, indem die Berührungsflächen vergrössert werden, an denen der Wärmeaustausch stattfindet.

Wie im oberen Teil der Fig. 5 und auch in Fig. 8 gezeigt ist, kann der Ueberdruck zwischen der Entspannungskammer 35 und der benachbarten Sammelkammer 19 auch durch eine kalibrierte Oeffnung 40 gesteuert werden, die gegebenenfalls mit einer Klappe versehen ist, wie dies schematisch in 41 dargestellt ist; eine solche Klappe öffnet wie ein Sicherheitsventil, wenn der Ueberdruck in der Entspannungskammer 35 zu gross wird, um ein grösseres Dampfvolumen in die benachbarte Sammelkammer 19 zu leiten.

Um den Druck am Austritt des Spiels 3 besser zu steuern, können auch mehrere Entspannungskammern 35 in Reihe geschaltet werden, beispielsweise indem eine zweite Ringnut 39 vorgesehen wird, entweder in der Verlängerung 38, wie dies gestrichelt in Fig. 6 gezeigt ist, oder in der Hülse 4, oder indem eine zweite, der Wand 36 ähnliche und in axialer Distanz zu dieser anzuordnenden Wand vorgesehen wird. Zum gleichen Zweck kann auch gemäss Fig. 8 eine Entspannungskammer 35 in Form einer in der Verlängerung 38 der Hülse 2 gebildeten Ringnut 39 (in welcher die Entspannung im Raum 37 zwischen Hülse 4 und Verlängerung 38 einem laminaren Strömungsgesetz gehorcht) in Reihe geschaltet sein mit einer Entspannungskammer 35, welche durch eine Wand 36 gebildet ist (und in der die Entspannung nach einer turbulenten Strömungsgesetzmässigkeit verläuft).

Es versteht sich überdies, dass die beschriebenen Ausführungsformen der vorliegenden Erfindung nur Beispiele darstellen und keineswegs als abschliessend zu betrachten sind; ohne den Rahmen der Erfindung zu überschreiten, kann der Fachmann zahlreiche Aenderungen daran anbringen. So kann insbesondere die Wand 36 oder eine Mehrzahl davon formschlüssig mit der Hülse 2 statt mit dem Gehäuse 8 verbunden sein. Desgleichen kann die Ringnut 39 oder eine Mehrzahl davon statt in der Verlängerung 38 der Hülse 2 ebenso in der inneren Umfangsfläche einer Muffe angeordnet sein, welche in Formschluss mit dem Gehäuse 8 ist und die Hülse 4 mit geringem Spiel umschliesst. Und obschon gemäss vorstehender Beschreibung eine oder mehrere Entspannungskammern nur am rechten Ende des Spiels vorgesehen sind, versteht es sich, dass eine oder mehrere Entspannungskammern ebenfalls am linken Spielende angeordnet werden können, wenn dort eine Verdampfungsgefahr für das Tragmittel besteht. Darüber hinaus kann die Erfindung im Gegensatz zur beschriebenen Anwendung bei einem hydrostatischen Lager ebenfalls bei hydrodynamischen Lagern benutzt werden, die, obschon sie weniger empfindlich auf Verdampfungsgefahr sind, in strikt analoger Weise reagieren. Schliesslich ist die Erfindung auch bei Lagern anwendbar, die mit einem andern flüssigen Körper als Tragmittel arbeiten, wie beispielsweise Ammoniak, Freon, flüssigem Natrium usw. .....

P a t e n t a n s p r ü c h e

1. Flüssigkeitsgeschmiertes Lager

   - mit einem inneren zylindrischen Element (1, 4) und einem äusseren hülsenförmigen Element (2), welches das innere zylindrische Element mit geringem Spiel (3) umhüllt, wobei das eine (2) der beiden Elemente zwischen seinen Enden mehrere Kammern ($CH_1$ bis $CH_8$) aufweist, die an der dem andern Element (1, 4) zugekehrten Umfangsfläche regelmässig über den Kreisumfang verteilt sind und mit Einspritzöffnungen ($O_1$ bis $O_8$) für eine Tragflüssigkeit versehen sind,

   - mit einem Lagergehäuse (8), dessen Dichtungen (15, 16, 17) zusammen mit den äusseren und dem inneren Element (2 resp. 1, 4) Sammelkammern (18, 19, 20) bilden für die aus dem genannten Spiel (3) resp. an den Lagerenden austretende Tragflüssigkeit,

   - und mit einem hydraulischen Kreislauf (25), um die Tragflüssigkeit aus den Sammelkammern (18, 19, 20) zu der Mehrzahl von Kammern ($CH_1$ bis $CH_8$) umzuwälzen,

   dadurch gekennzeichnet, dass es zwischen mindestens einem axialen Ende des Spiels (3) und der daran angrenzenden Sammelkammer (19) mit einer zusätzlichen Entspannungskammer (35) versehen ist, die mit der Sammelkammer (19) über einen kleinen Ringraum (37) verbunden ist, wobei der Ringraum (37) gegenüber dem Spiel (3) derart berechnt ist, dass der Flüssigkeitsdruck in der Entspannungskammer (35) höher ist als jener in der angrenzenden Sammelkammer (19).

2. Lager nach Anspruch 1, dadurch gekennzeichnet, dass zwischen dem genannten axialen Ende des Spiels (3) und der benachbarten Sammelkammer (19) mehrere Entspannungskammern (35) in Reihe geschaltet sind.

3. Lager nach Anspruch 1 oder 2, dadurch gekennzeichnet, dass die genannte Entspannungskammer (35) durch eine Wand (36) gebildet ist, die in axialer Distanz zu einem der Enden des äusseren Elementes (2) situiert ist und die sich vom Gehäuse (8) aus bis auf einen kleinen Abstand zum inneren Element (1, 4) hin erstreckt.

4. Lager nach Anspruch 3, dadurch gekennzeichnet, dass die genannte Wand (36) eine kalibrierte Oeffnung (40) aufweist, welche die Entspannungskammer (35) mit der benachbarten Sammelkammer (19) verbindet.

5. Lager nach Anspruch 4, dadurch gekennzeichnet, dass ein Sicherheitsventil (41) der genannten Oeffnung (40) zugeordnet ist.

6. Lager nach Anspruch 1 oder 2, dadurch gekennzeichnet, dass das genannte, hülsenförmige äussere Element (2) eine axiale Verlängerung (38) aufweist, und dass die Entspannungskammer (35) durch eine Ringnut (39) gebildet ist, die entweder in der inneren Umfangsfläche der Verlängerung (38) oder in der äusseren Umfangsfläche des inneren Elementes (1, 4) angeordnet ist.

Fig.1

Fig.3

Fig.2

Fig.4

**0074127**

Fig.5

Fig.6

Fig.8

Fig.7

**0074127**
Nummer der Anmeldung

Europäisches
Patentamt

**EUROPÄISCHER RECHERCHENBERICHT**

EP 82 20 0878

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| | --- | | F 16 C 32/06 |
| Y | FR-A-2 024 704 (VSESOJUZNY NAUCHNO-ISSLEDOVATELSKY) * Seiten 1-4; Figuren * | 1,3 | |
| | --- | | |
| Y | FR-A-1 418 179 (COMMISSARIAT) * Seiten 1,2; Figuren 1,4 * | 1,2 | |
| | --- | | |
| A,Y | GB-A- 797 528 (NATIONAL) | 1 | |
| | --- | | |
| A,Y | GB-A-1 512 952 (GLACIER) | 1 | |
| | ----- | | |

**RECHERCHIERTE SACHGEBIETE (Int. Cl. ³)**

F 16 C 32/00

Der vorliegende Recherchenbericht wurde für alle Patentansprüche erstellt.

| Recherchenort | Abschlußdatum der Recherche | Prüfer |
|---|---|---|
| DEN HAAG | 30-11-1982 | FLORES E. |